# EUROPEAN PATENT APPLICATION

(11) **EP 4 644 293 A1**
(43) Date of publication of application: **05.11.2025**
(21) Application number: 23911873.0
(22) Date of filing: 20.12.2023
(51) Int. Cl.: B65G 1/00

(54) **AUTOMATIC CONVEYANCE VEHICLE SYSTEM AND AUTOMATIC CONVEYANCE VEHICLE**

(30) Priority: 28.12.2022 JP 2022212694
(71) Applicant: KYOCERA Document Solutions Inc., Osaka-shi, Osaka 540-8585 (JP)
(72) Inventor: NISHIYAMA, Naoki, Osaka-shi, Osaka 540-8585 (JP); TSUTSUMI, Kazuma, Osaka-shi, Osaka 540-8585 (JP); TAKANAWA, Yuki, Osaka-shi, Osaka 540-8585 (JP); MORI, Kento, Osaka-shi, Osaka 540-8585 (JP); OMURA, Hiroyoshi, Osaka-shi, Osaka 540-8585 (JP)
(74) Representative: Herrero & Asociados, S.L.
(86) International application number: PCT/JP2023/045623
(87) International publication number: WO 2024/143093

(57) **Abstract**

In an automatic guided vehicle (10), a controller 74 controls each of traveling drive motors (33, 45, 55, 56) to cause the automatic guided vehicle (10) to travel along a conveyor device (11A) at a traveling speed higher than a transportation speed of an article, cause an arm (42) on an upstream side in a transportation direction to protrude to a space above the conveyor device (11A), cause the arm (42) on a downstream side in the transportation direction to protrude if the arm (42) on the upstream side catches up with the article, cause the arms (42) to sandwich the article therebetween, cause each of claws (51) to protrude from a distal end side of each of the arms (42), cause each of the arms (42) to retract into the automatic guided vehicle (10), hook each of the claws (51) onto the article, and transfer the article to the automatic guided vehicle (10).

## Description

### TECHNICAL FIELD

The present invention relates to an automatic guided vehicle system causing an automatic guided vehicle to travel and an automatic guided vehicle thereof, and particularly relates to a technology of transferring an article from a conveyor to an automatic guided vehicle while the automatic guided vehicle is caused to travel along the conveyor.

### BACKGROUND ART

In recent years, various systems for transporting articles using an automatic guided vehicle (AGV) have been proposed. For example, in the automatic guided system described in Patent Document 1, an item is transported by a conveyor, and if the item arrives at the end of the conveyor, a nearby automatic guided vehicle is called up. A robot loads the item on the automatic guided vehicle, the item is transported to a shelf by the automatic guided vehicle, and the item is stored in the shelf.

### Citation List

### Patent Document

Patent Document 1: Japanese Unexamined Patent Application Publication No. 2020-123196

### SUMMARY OF INVENTION

However, as in Patent Document 1, when an item is transported using a conveyor and the item is loaded onto an automatic guided vehicle by a robot after the item arrives at the end of the conveyor, it takes a long time from when the conveyor starts transporting the item to when the item is loaded onto the automatic guided vehicle so that the item is not moved efficiently.

In addition, it is anticipated to apply an arm robot or the like as a robot to load items onto an automatic guided vehicle. However, when such a robot is applied, However, when such a robot is applied, there is concern that a system constitution will become complicated and system costs will increase.

The present invention has been made in consideration of the foregoing circumstances, and an object thereof is to make it possible to transfer an article from a conveyor to an automatic guided vehicle with a simple constitution while causing the automatic guided vehicle to travel along the conveyor, and to efficiently move the article.

An automatic guided vehicle system according to an aspect of the present invention includes a conveyor for transporting an article loaded thereon, and an automatic guided vehicle traveling along the conveyor. The automatic guided vehicle includes a traveling drive device causing the automatic guided vehicle to travel by rotating driving wheels of the automatic guided vehicle; a pair of arms provided at corresponding positions on the automatic guided vehicle on a downstream side and an upstream side in a transportation direction of the article in the conveyor when the automatic guided vehicle travels along the conveyor, extending in a direction orthogonal to the transportation direction of the article, facing each other at positions at a distance corresponding to a width of the article in the transportation direction of the article in the conveyor, protruding outward from the automatic guided vehicle by reciprocating in the orthogonal direction, and retracting into the automatic guided vehicle from the protruding positions; arm drive devices for causing the corresponding arms to reciprocate in the orthogonal direction; first claws correspondingly provided on distal end sides of the pair of arms, protruding to a space between the arms from arm parts on the distal end sides, and retreating into the arm parts; first claw drive devices causing the corresponding first claws to perform the protrusive operation and the retreat operation; and a controller controlling the traveling drive device, the arm drive devices, and the first claw drive devices to cause the automatic guided vehicle to travel along the conveyor at a traveling speed higher than a transportation speed of the article, cause the arm provided on the upstream side to protrude above the conveyor from the automatic guided vehicle, cause the arm provided on the downstream side to protrude above the conveyor from the automatic guided vehicle when the arm provided on the upstream side has moved to a position of the article being transported by the conveyor in the transportation direction, and cause each of the arms to retract into the automatic guided vehicle from above the conveyor after each of the first claws has protruded to the space between the arms from the distal end side of each of the arms in a state in which the article is present between the arms.

In addition, an automatic guided vehicle according to another aspect of the present invention is an automatic guided vehicle traveling along a conveyor for transporting an article loaded thereon. The automatic guided vehicle includes a traveling drive device causing the automatic guided vehicle to travel by rotating driving wheels of the automatic guided vehicle; a pair of arms provided at corresponding positions on the automatic guided vehicle on a downstream side and an upstream side in a transportation direction of the article in the conveyor when the automatic guided vehicle travels along the conveyor, extending in a direction orthogonal to the transportation direction of the article, facing each other at positions at a distance corresponding to a width of the article in the transportation direction of the article in the conveyor, protruding outward from the automatic guided vehicle by reciprocating in the orthogonal direction, and retracting into the automatic guided vehicle from the protruding positions; arm drive devices for causing the corresponding arms to reciprocate in the orthogonal direction; first claws correspondingly provided on distal end sides of the pair of arms, protruding to a space between the arms from arm parts on the distal end sides, and retreating into the arm parts; first claw drive devices causing the corresponding first claws to perform the protrusive operation and the retreat operation; and a controller controlling the traveling drive device, the arm drive devices, and the first claw drive devices to cause the automatic guided vehicle to travel along the conveyor at a traveling speed higher than a transportation speed of the article, cause the arm provided on the upstream side to protrude above the conveyor from the automatic guided vehicle, cause the arm provided on the downstream side to protrude above the conveyor from the automatic guided vehicle when the arm provided on the upstream side has moved to a position of the article being transported by the conveyor in the transportation direction, and cause each of the arms to retract into the automatic guided vehicle from above the conveyor after each of the first claws has protruded to the space between the arms from the distal end side of each of the arms in a state in which the article is present between the arms.

According to the present invention, it is possible to transfer an article from a conveyor to an automatic guided vehicle with a simple constitution while causing the automatic guided vehicle to travel along the conveyor, and to efficiently move the article.

### BRIEF DESCRIPTION OF DRAWINGS

[FIG. 1] A plan view schematically showing an automatic guided vehicle system according to an embodiment of the present invention.
[FIG. 2] A perspective view showing an automatic guided vehicle in the automatic guided vehicle system of the present embodiment.
[FIG. 3] A perspective view showing a sliding state of each arm of the automatic guided vehicle.
[FIG. 4] A view schematically showing a rack gear and a pinion gear for causing the arm to reciprocate.
[FIGS. 5A and 5B] A perspective view and a plan view showing a mechanism for causing a first claw and a second claw of each arm to protrude or retreat.
[FIG. 6] A block diagram showing a control system of the automatic guided vehicle.
[FIG. 7] A flowchart showing a control procedure for transferring a case being transported by a conveyor to the automatic guided vehicle and moving the case by the automatic guided vehicle.
[FIG. 8A] A perspective view showing a state in which a case is being transported by the conveyor of the automatic guided vehicle system.
[FIG. 8B] A perspective view showing a state in which the automatic guided vehicle has caught up with the case being transported by the conveyor.
[FIG. 9] A perspective view showing a state in which one arm of the automatic guided vehicle comes into contact with the case being transported by the conveyor.
[FIG. 10A] A perspective view showing a state in which the case being transported by the conveyor of the automatic guided vehicle system is sandwiched between the arms of the automatic guided vehicle.
[FIG. 10B] A perspective view showing a process in which the case being transported by the conveyor is being transferred to the automatic guided vehicle.
[FIG. 11] A perspective view showing a state in which the first claw of each arm on a distal end inward side is caused to protrude with the case being transported by the conveyor sandwiched between the arms of the automatic guided vehicle.
[FIG. 12] A perspective view showing the automatic guided vehicle loaded with the case transferred from the conveyor.
[FIG. 13] A perspective view showing a state in which the automatic guided vehicle has stopped in front of a storage shelf.
[FIG. 14] A perspective view showing a state in which the second claw of each arm on a rear end inward side is caused to protrude with the case sandwiched between the arms of the automatic guided vehicle.
[FIG. 15] A perspective view showing a process in which the case is being transferred from the automatic guided vehicle to the storage shelf.
[FIG. 16] A perspective view showing the automatic guided vehicle which has transferred the case to the storage shelf.
[FIG. 17] A perspective view showing a state in which the case has been transferred from the automatic guided vehicle to the storage shelf.

### DESCRIPTION OF EMBODIMENT

Hereinafter, an embodiment of the present invention will be described with reference to the drawings.

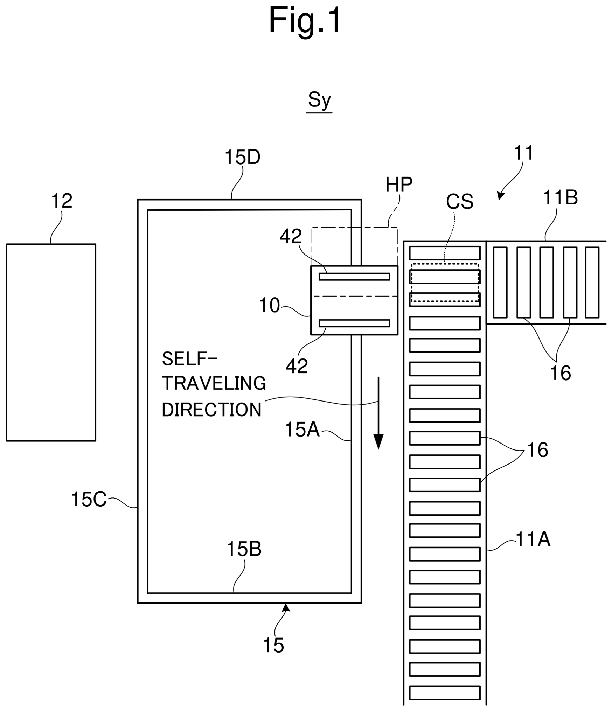

FIG. 1 is a schematic view showing an automatic guided vehicle system according to the embodiment of the present invention. An automatic guided vehicle system Sy shown in FIG. 1 includes an automatic guided vehicle 10, and a conveyor device 11 for transporting an article. The automatic guided vehicle system Sy is provided indoors, such as a warehouse equipped with storage shelves 12.

The automatic guided vehicle 10 travels by itself along a traveling line 15 laid on a floor surface. For example, the traveling line 15 is a magnetic tape taped on the floor surface, and the automatic guided vehicle 10 is provided with a magnetic sensor for detecting the magnetic tape. In the automatic guided vehicle 10, the magnetic sensor detects the position of the magnetic tape (traveling line 15) and performs steering control in accordance with the position of the traveling line 15 to cause the automatic guided vehicle 10 to travel along the traveling line 15. Alternatively, the traveling line 15 is a colored tape which has been taped on the floor surface and has a color or a reflectance different from that of the floor surface, and the automatic guided vehicle 10 is provided with an optical sensor such as a CCD for detecting the colored tape. In the automatic guided vehicle 10, a controller (which will be described below) detects the position of the colored tape (traveling line 15) on the basis of information obtained from the optical sensor and performs steering control in accordance with the position of the traveling line 15 to cause the automatic guided vehicle 10 to travel along the traveling line 15. Both the method using a magnetic tape and a magnetic sensor and the method using a colored tape and an optical sensor are known technologies.

The conveyor device 11 is constituted of a first conveyor 11A, and a second conveyor 11B connected to one end of the first conveyor 11A. Both the first conveyor 11A and the second conveyor 11B have a plurality of rollers 16 installed side by side in a transportation direction of a case CS (example of an article). Each roller 16 is supported by frames of the first conveyor 11A and the second conveyor 11B so as to pivot on a corresponding shaft orthogonal to the transportation direction of the case CS, is rotatably driven in one direction, and transports the case CS on each roller 16. Belt conveyors may be applied as the first conveyor 11A and the second conveyor 11B.

The traveling line 15 is constituted by connecting a first traveling line 15A, a second traveling line 15B, a third traveling line 15C, and a fourth traveling line 15D in a rectangular shape. All the traveling lines 15A to 15D have a linear shape. The first traveling line 15A extends in parallel with a direction in which the first conveyor 11A extends (direction in which the case CS is transported). The fourth traveling line 15D passes near the storage shelf 12.

The automatic guided vehicle 10 starts traveling from a standby position HP provided near a starting end of the first traveling line 15A, travels along the first traveling line 15A in parallel with the first conveyor 11A, and shifts to traveling along the second traveling line 15B by turning the proceeding direction by 90 degrees at a terminal end of the first traveling line 15A. The automatic guided vehicle 10 further shifts to traveling along the third traveling line 15C by turning the proceeding direction by 90 degrees at a terminal end of the second traveling line 15B. The automatic guided vehicle 10 travels along the third traveling line 15C to reach the storage shelf 12 and then shifts to traveling along the fourth traveling line 15D by turning the proceeding direction by 90 degrees at a terminal end of the third traveling line 15C. The automatic guided vehicle 10 further shifts to traveling along the first traveling line 15A by turning the proceeding direction by 90 degrees at a terminal end of the fourth traveling line 15D and returns to the standby position HP near the starting end of the first traveling line 15A.

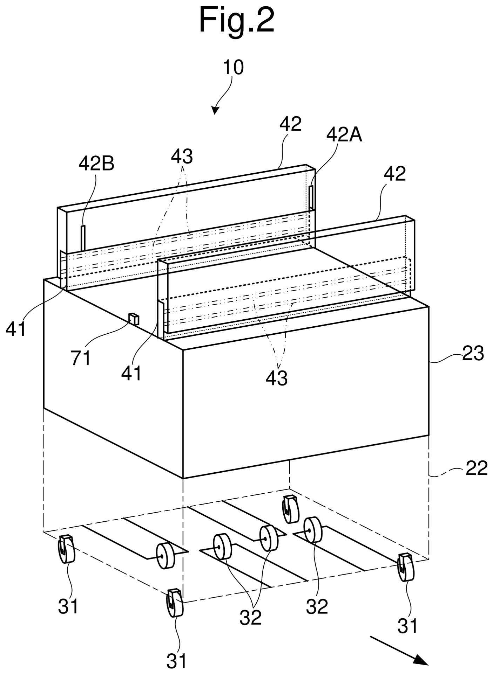

FIG. 2 is an enlarged perspective view schematically showing the automatic guided vehicle 10. As shown in FIG. 2, the automatic guided vehicle 10 is constituted to be provided with a traveling section 22 on a lower side of a vehicle main body and provided with a working section 23 on an upper side of the vehicle main body.

Corresponding casters 31 are provided at four corners of the bottom of the traveling section 22, and a plurality of driving wheels 32 are provided apart from each other on the inward side of the bottom of the traveling section 22. Each driving wheel 32 is rotatably driven by a corresponding traveling drive motor 33 so that the automatic guided vehicle 10 travels and the wheel of each caster 31 performs subordinate rotation. In addition, the traveling drive motor 33 rotatably driving the driving wheel 32 is controlled separately for each driving wheel 32 so that the rotation speed of the corresponding driving wheel 32 is adjusted and the proceeding direction of the automatic guided vehicle 10 is changed. In FIG. 2, illustration of a mechanism including a drive source of each driving wheel 32 is omitted.

The working section 23 has a pair of support walls 41 disposed and installed in a projecting manner so as to face each other on its upper surface. Each support wall 41 supports an arm 42 with an upper part and an outer side wall thereof. For example, each arm 42 has a hollow casing shape and is supported by each support wall 41 in a manner of being slidable along each support wall 41 through slide rails 43. The separation distance between the arms 42 is set to a predetermined distance which is slightly longer than the width of the case CS transported by the conveyor device 11 so that the case CS can be inserted and sandwiched between the arms 42.

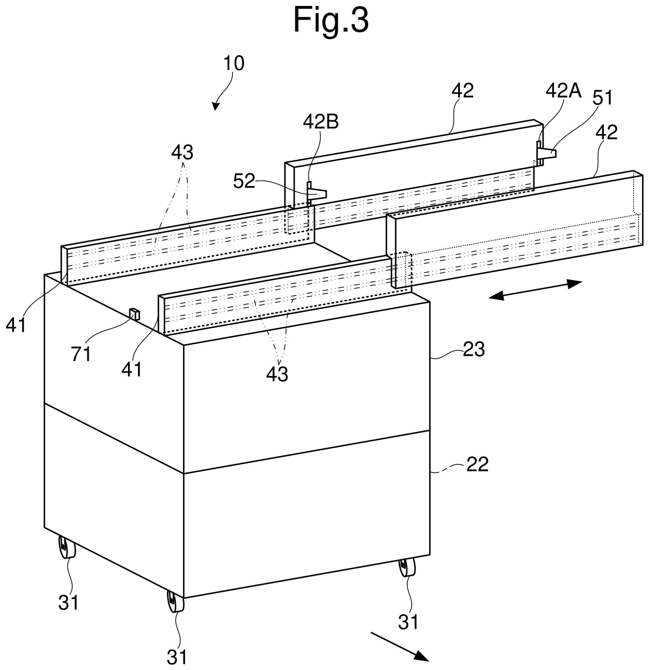

FIG. 3 is a perspective view showing a sliding state of each arm 42. Both the arms 42 are each supported by the two slide rails 43 extending in a horizontal direction in a manner of being slidable with respect to the corresponding support walls 41, the movement direction is guided, and each arm 42 reciprocates in its longitudinal direction. For example, each slide rail 43 has a constitution referred to as three-stage sliding, that is, a constitution in which a portion thereof protrudes toward the outside (lateral side of the working section 23) and moves. The slide rails 43, in which a first rail forming a portion thereof is provided in a side wall of the support wall 41, have a second rail which is interlocked and supported by this first rail and of which the movement direction is guided by the first rail so as to move to the outside (lateral side of the working section 23). This second rail is attached to the arm 42. Accordingly, it is possible to perform an operation in which each arm 42 reciprocates in the horizontal direction and each arm 42 in its entirety protrudes outward from the automatic guided vehicle 10 and retracts into the automatic guided vehicle 10 from the protruding position.

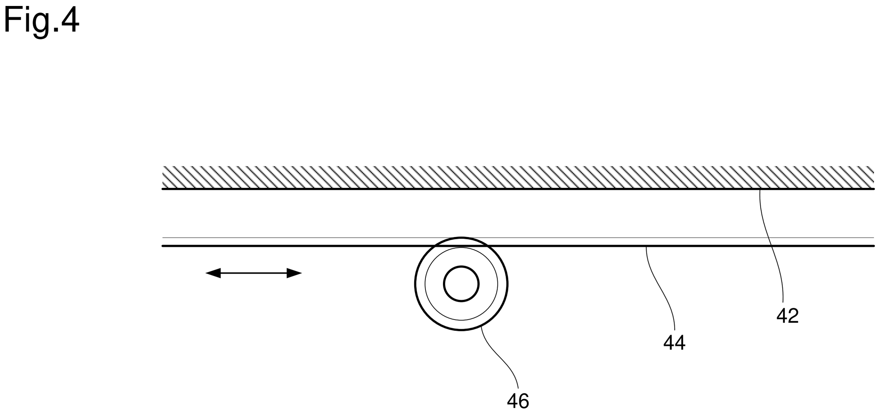

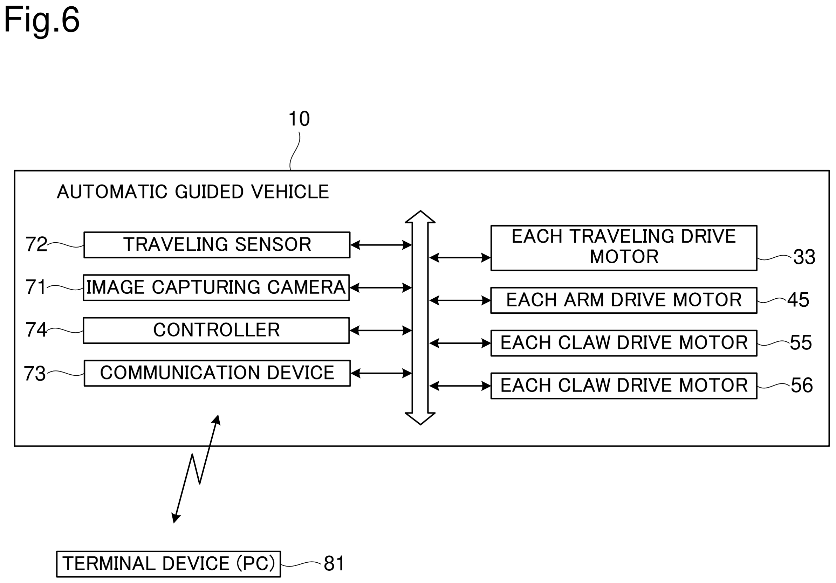

As shown in FIG. 4, a rack gear 44 is provided at a lower end of the arm 42 separately for each arm 42. In addition, each support wall 41 is provided with a corresponding arm drive motor 45 (shown in FIG. 6), and a corresponding pinion gear 46 is fixed to an output shaft of each arm drive motor 45. If each arm drive motor 45 reciprocally rotates, the corresponding pinion gear 46 reciprocally rotates, and each rack gear 44 and each arm 42 reciprocate in response to guidance for the movement direction by the slide rails 43. The foregoing outward movement of the arm 42 in the movement direction is restricted to a position where the state in which the arm 42 is interlocked and supported by the support wall 41 and the slide rails 43 is not cancelled, as shown in FIG. 3, due to engagement of the first rail and the second rail of the slide rails 43 and control of rotation of the arm drive motor 45.

In addition, as shown in FIGS. 2 and 3, separately for each arm 42, a slit 42A is formed on a side surface which is the inward side at the distal end of the arm 42 (side facing the other arm 42 on the opposite side), and a first claw 51 protruding to the space between the arms 42 through the slit 42A is provided. In addition, a slit 42B is formed on a side surface which is the inward side at the rear end (base end) of the arm 42 (side facing the other arm 42 on the opposite side), and a second claw 52 protruding to the space between the arms 42 through the slit 42B is provided.

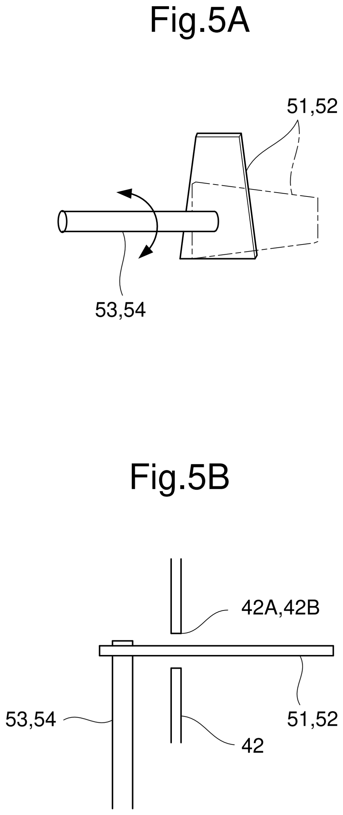

As shown in FIG. 5, each first claw 51 is supported by a rotary shaft 53 on the inward side of the hollow casing-shaped arm 42, and each second claw 52 is supported by a rotary shaft 54 on the inward side of the hollow casing-shaped arm 42. Each first claw 51 performs an operation of being reciprocally rotated by a claw drive motor 55 (shown in FIG. 6) connected to each rotary shaft 53 and protruding to the space between the arms 42 from the slit 42A and an operation of moving from the space and retreating into the arm 42. Each second claw 52 performs an operation of being reciprocally rotated by a claw drive motor 56 (shown in FIG. 6) connected to each rotary shaft 54 and protruding to the space between the arms 42 from the slit 42B and an operation of moving from the space and retreating into the arm 42.

As shown in FIGS. 2 and 3, for example, an image capturing camera 71 constituted of a CCD or the like is provided on the working section 23. When the automatic guided vehicle 10 travels along the first traveling line 15A in parallel with the first conveyor 11A, the direction of the image capturing camera 71 is set such that the image capturing camera 71 faces a space above the first conveyor 11A. In the present embodiment, this image capturing camera 71 is disposed in a central part of a region sandwiched between the two support walls 41 in the proceeding direction of the automatic guided vehicle 10 on the working section 23, that is, the base end side of each arm 42. The image capturing camera 71 captures an image of a 2D code (for example, QR code (registered trademark)) Q or a mark attached to the case CS transported on the first conveyor 11A. The image capturing camera 71 may be disposed on the base end side of each arm 42, that is, a position of one support wall 41 on the outward side (outward side of a region sandwiched between the two support walls 41) on the working section 23 in the proceeding direction of the automatic guided vehicle 10, or the upper part of the one support wall 41, that is, a position on the side wall side facing the other support wall 41. Moreover, the image capturing camera 71 may be disposed at a different position, even if the position is not on the base end side of each arm 42, as long as it is a position where an image of the 2D code Q or the mark attached to the case CS transported on the first conveyor 11A can be captured.

FIG. 6 is a block diagram showing a control system of the automatic guided vehicle 10. As shown in FIG. 6, the automatic guided vehicle 10 includes the corresponding traveling drive motor 33 rotatably driving each driving wheel 32 of the traveling section 22, the corresponding arm drive motor 45 moving each arm 42 of the working section 23 in the horizontal direction, each claw drive motor 55 causing each first claw 51 to perform an operation of protruding to the space between the arms 42 from the slit 42A of each arm 42 on the both end inward side and an operation of retreating into the arm 42, each claw drive motor 56 causing each second claw 52 to perform an operation of protruding to the space between the arms 42 from the slit 42B of each arm 42 on the both end inward side and an operation of retreating into the arm 42, the image capturing camera 71 capturing an image of the 2D code Q attached to the case CS on the first conveyor 11A, a traveling line sensor 72 for detecting the traveling line 15, a communication device 73, and a controller 74.

The communication device 73 is a communication interface including a communication module such as a LAN chip (not shown), is connected to a terminal device 81 through a wired or wireless LAN, and transmits and receives data with respect to the terminal device 81. For example, the terminal device 81 is a personal computer (PC), which is operated by a user.

The controller 74 is constituted to include a processor, a random access memory (RAM), a read only memory (ROM), and a dedicated hardware circuit. For example, the processor is a central processing unit (CPU), an application specific integrated circuit (ASIC), a micro-processing unit (MPU), or the like. The controller 74 generally controls the automatic guided vehicle 10 by operating the foregoing processor in accordance with a control program stored in the foregoing ROM.

For example, the controller 74 performs operation control of detecting the position of the traveling line 15 on the basis of a detection output of the traveling line sensor 72, controlling driving of the traveling drive motor 33 of the driving wheel 32 separately for each driving wheel 32 in accordance with this detected position of the traveling line 15, adjusting the rotation speed of the driving wheel 32, changing the proceeding direction of the automatic guided vehicle 10 to cause the automatic guided vehicle 10 to travel along the traveling line 15 in a state in which the longitudinal direction of each arm 42 is orthogonal to the traveling line 15. In addition, the controller 74 adjusts a traveling speed V of the automatic guided vehicle 10.

In addition, the controller 74 controls driving of each arm drive motor 45 to cause each arm 42 to reciprocate and controls driving of each of the claw drive motors 55 and 56 to cause each of the claws 51 and 52 to protrude from the corresponding slits 42A and 42B formed at both ends of each arm 42 or to retreat into the arm 42.

Moreover, the controller 74 acquires a captured image from the image capturing camera 71, analyzes the image, and identifies the 2D code Q included in the image.

The automatic guided vehicle 10 having such a constitution stops and stands by at the standby position HP under the control of the controller 74, and if the first conveyor 11A starts transporting the case CS, the case CS being transported by the first conveyor 11A is transferred to the automatic guided vehicle 10 by driving each arm 42 while the automatic guided vehicle 10 travels along the first traveling line 15A in parallel with the first conveyor 11A. Moreover, under the control of the controller 74, the automatic guided vehicle 10 travels along a route of the first traveling line 15A → the second traveling line 15B → the third traveling line 15C, moves to a place in front of the storage shelf 12, stops there, transfers the case CS to the storage shelf 12, travels along a route of the third traveling line 15C → the fourth traveling line 15D → the first traveling line 15A, and returns to the standby position HP.

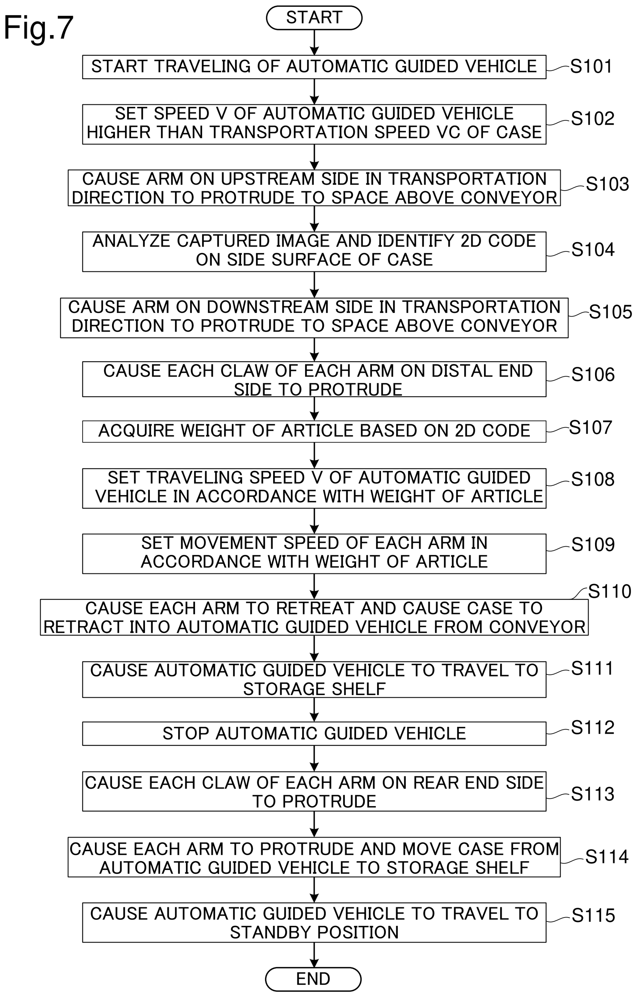

Next, a control procedure for transferring the case CS being transported by the first conveyor 11A to the automatic guided vehicle 10 as described above and moving the case CS by the automatic guided vehicle 10 will be described in detail with reference to the flowchart shown in FIG. 7, and the like.

As shown in FIG. 1, in a state in which the automatic guided vehicle 10 stands by at the standby position HP on the first traveling line 15A, the case CS starts being transported by the second conveyor 11B. The standby position HP is set at the terminal end of the second conveyor 11B, that is, a side part at the position (starting end of the first conveyor 11A) connected to the first conveyor 11A. The case CS on the second conveyor 11B is transported in a posture in which the attached 2D code Q faces the standby position HP. The case CS which has been transported to the position indicated by the dashed line in FIG. 1 is successively transported by the first conveyor 11A with the transportation direction being switched to the direction of the arrow shown in FIG. 1.

At the point of time when the case CS is transported to the position indicated by the dashed line in FIG. 1, the automatic guided vehicle 10 at the standby position HP captures an image of the 2D code Q of the case CS with the image capturing camera 71. The image capturing camera 71 of the automatic guided vehicle 10 at the standby position HP is provided at a position facing the 2D code Q on the side surface of the case CS. The 2D code Q includes identification information indicating a unique ID of the case CS. In the automatic guided vehicle 10, the controller 74 analyzes the image of the 2D code Q captured by the image capturing camera 71 and judges whether the ID indicated by the identification information is the same as the ID indicated by the identification information received in advance from the terminal device 81 via the communication device 73.

In the automatic guided vehicle 10, when the controller 74 judges that it is the same as described above, traveling of the automatic guided vehicle 10 in the direction of the arrow shown in FIG. 1 is started (S101). At this point of time, it is assumed that the case CS has started being transported by the first conveyor 11A without changing the posture and it has already passed the position indicated by the dashed line in FIG. 1, that is, the standby position HP.

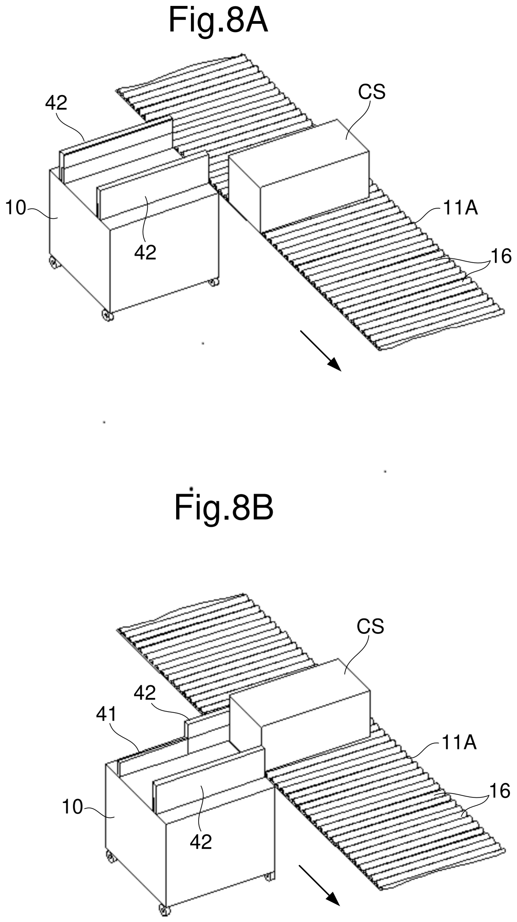

The controller 74 detects the position of the traveling line 15 on the basis of a detection output of the traveling line sensor 72 and controls driving of the traveling drive motor 33 of each driving wheel 32 in accordance with this detected position of the traveling line 15 to cause the automatic guided vehicle 10 to travel at a position close to the first conveyor 11A in parallel with the first conveyor 11A along the first traveling line 15A such that the automatic guided vehicle 10 is in a posture with the direction in which each arm 42 extends (longitudinal direction of the arm 42) being orthogonal to the traveling line 15, as shown in FIG. 8A (S102). At this time, the controller 74 sets the traveling speed V of the automatic guided vehicle 10 to a predetermined traveling speed VA higher than a transportation speed VC of the case CS by the first conveyor 11A (S102).

In addition, the controller 74 controls driving of one arm drive motor 45 to cause one arm 42 on the upstream side in the transportation direction of the case CS to protrude to the space above the first conveyor 11A, as shown in FIG. 8B (S103).

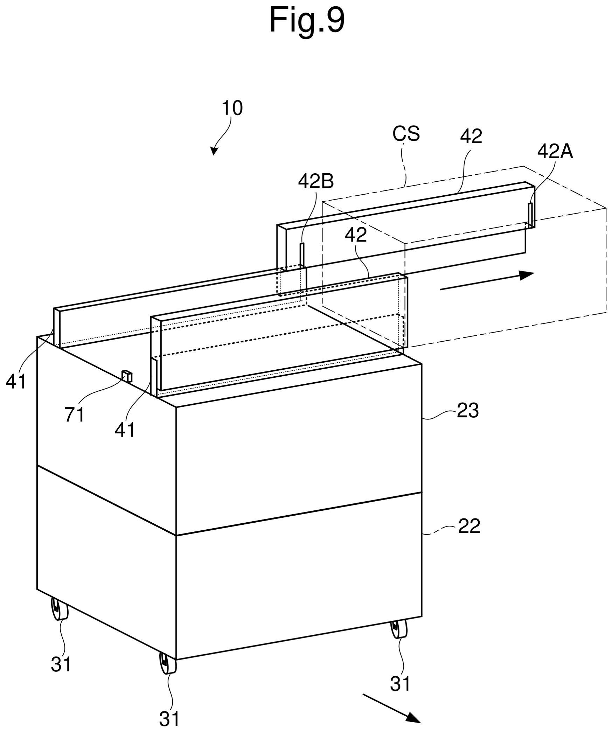

At this time, since the controller 74 has set the traveling speed V of the automatic guided vehicle 10 to the foregoing traveling speed VA higher than the transportation speed VC of the case CS by the first conveyor 11A, as shown in FIGS. 8B and 9, the one arm 42 on the upstream side in the transportation direction of the case CS, that is, the arm 42 protruding to the space above the first conveyor 11A catches up and comes into contact with the case CS.

In addition, the side surface of the case CS facing the automatic guided vehicle 10 side is provided with a predetermined mark (a hole formed on the side surface, a predetermined printed image, or the like, and it may be the 2D code Q). Since the image capturing camera 71 is provided at a position where an image of the side surface of the case CS can be captured when the foregoing one arm 42 catches up and comes into contact with the case CS, an image of the foregoing mark is captured by the image capturing camera 71 when the foregoing one arm 42 catches up and comes into contact with the case CS.

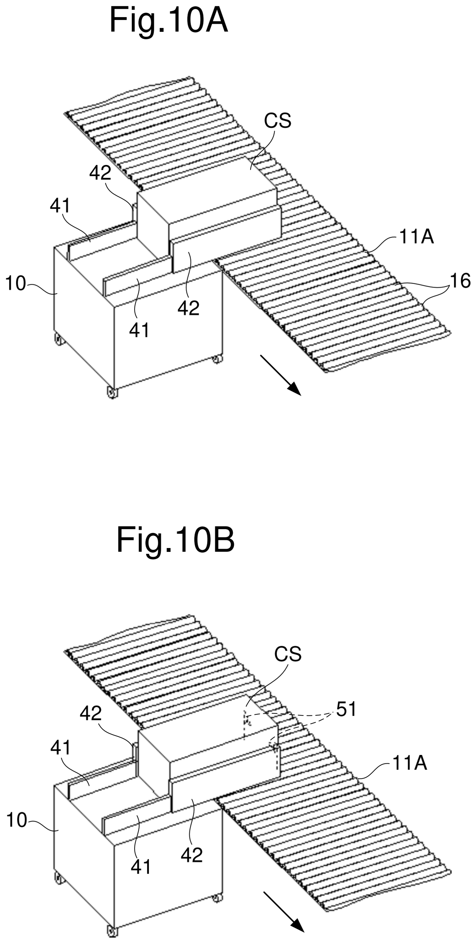

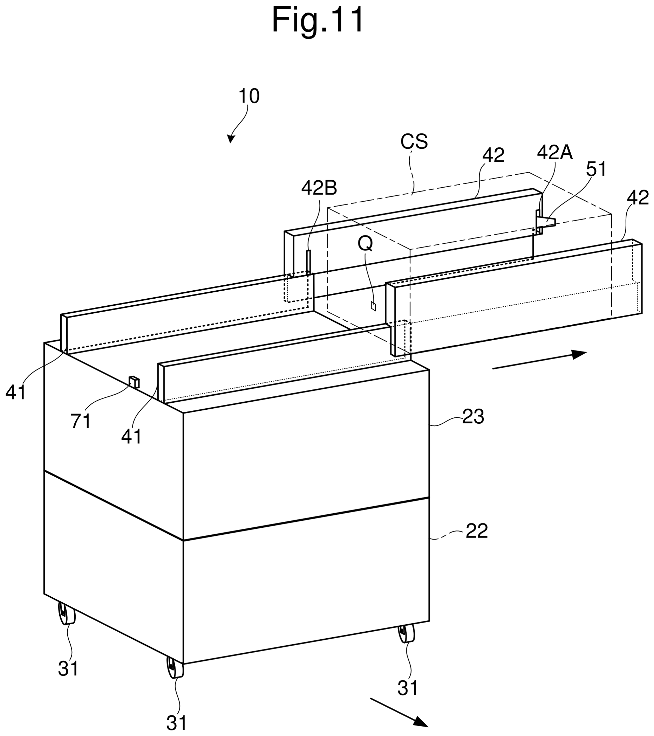

The controller 74 acquires the image captured by the image capturing camera 71 and analyzes this image. If an image indicating the foregoing mark is identified in the image (S104), it is determined that the foregoing one arm 42 has caught up and come into contact with the case CS, the controller 74 controls driving of the arm drive motor 45 for driving the other arm 42 to cause the other arm 42 on the downstream side in the transportation direction of the case CS to protrude to the space above the first conveyor 11A, as shown in FIG. 10A (S105). Since the separation distance between the arms 42 is set to a distance corresponding to the width of the case CS, being slightly longer than the width of the case CS, the case CS enters and is sandwiched between the arms 42 due to the protrusion of the other arm 42. In addition, each arm 42 protruding under the control of the controller 74 has a length allowing its distal end to reach a position beyond the rear end of the case CS in a direction orthogonal to the transportation direction of the case CS due to this protrusion. The controller 74 causes each arm 42 to protrude until the distal end of each arm 42 reaches a position beyond the rear end of the case CS in this manner (FIGS. 10A and 11). Subsequently, the controller 74 controls driving of each claw drive motor 55 to cause the first claw 51 on the distal end inward side of each arm 42 to protrude, as shown in FIGS. 10B and 11 (S106).

The 2D code Q identified in S104 includes information indicating the weight of contents contained in the case CS. This information may indicate the weight itself or may indicate, for example, the weight of a single unit of contents and the number of contents. The controller 74 distinguishes the weight of the contents on the basis of the information and calculates the weight of the article by adding the known weight of the case CS to this weight of the contents (S107). The foregoing information may indicate the added weight of the article itself including this weight of the contents and the known weight of the case CS. In this case, the controller 74 acquires the weight of the article directly from the information. At this point of time, the controller 74 controls driving of the traveling drive motor 33 of each driving wheel 32 to cause the automatic guided vehicle 10 to travel at the traveling speed VA which has been set in S102. After S107, the controller 74 compares the weight of the article calculated in S107 with a preset threshold, and when it is judged that the weight of the article is smaller than the threshold, it maintains the traveling speed V of the automatic guided vehicle 10 at the traveling speed VA.

In addition, if the weight of the article is equal to or greater than the foregoing threshold, the controller 74 reduces the traveling speed V of the automatic guided vehicle 10 to a predetermined traveling speed VD equal to or higher than the transportation speed VC of the case CS by the first conveyor 11A, that is, lower than the previous traveling speed VA which has been set in S102 (S108). Accordingly, when the weight of the article contained in the case CS is equal to or greater than the threshold, which is heavy, the traveling speed V of the automatic guided vehicle 10 is reduced while being kept equal to or higher than the transportation speed VC of the case CS. For this reason, when the automatic guided vehicle 10 is in a traveling state while the case CS is pushed by the foregoing one arm 42 which has been caused to protrude, a burden on each traveling drive motor 33 can be reduced, and a load from the case CS applied to the foregoing one arm 42 can also be reduced, and therefore the automatic guided vehicle 10 can be caused to stably travel.

Moreover, the controller 74 sets the rotation speed of each arm drive motor 45 in accordance with the weight of the article calculated in S107 (S 109). For example, the controller 74 sets the rotation speed of each arm drive motor 45 to be lower as the weight of the article increases. For example, the ROM built into the controller 74 stores a data table indicating the weight of the article and the rotation speed of each arm drive motor 45 corresponding thereto for each weight of the article. The controller 74 reads the rotation speed of each arm drive motor 45 corresponding to the weight of the article calculated in 107 from the data table and sets the read rotation speed as the rotation speed of each arm drive motor 45 corresponding to the weight of the article calculated in S107.

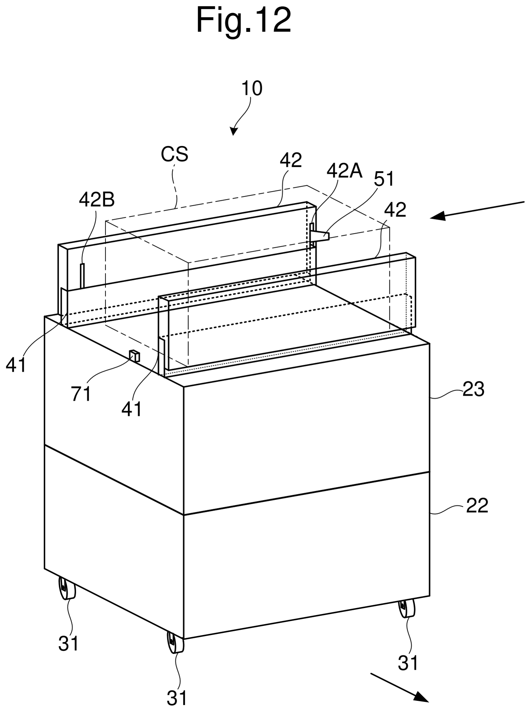

Further, the controller 74 controls driving of each arm drive motor 45 to rotate each arm drive motor 45 at the rotation speed which has been set in S108, causes each arm 42 to retreat from the space above the first conveyor 11A as shown in FIG. 12 and to retract into a region inside the working section 23 of the automatic guided vehicle 10 from the position where it has protruded as described above. At this time of retraction of each arm 42, each first claw 51 is hooked onto the end of the case CS, and each arm 42 causes the case CS to retract from the first conveyor 11A into the working section 23 of the automatic guided vehicle 10 (S110). That is, due to the foregoing retraction of each arm 42, the case CS moves from the position on the first conveyor 11A to a place on the working section 23 of the automatic guided vehicle 10. Accordingly, the movement speed of each arm 42 slows down as the weight of the article increases, and the case CS is transferred from the first conveyor 11A to the working section 23 of the automatic guided vehicle 10 at a low speed. For this reason, when each arm 42 causes the case CS to retract into the working section 23 of the automatic guided vehicle 10, a burden on each arm drive motor 45 can be reduced. In addition, movement of the case CS from the position on the first conveyor 11A to a place on the working section 23 of the automatic guided vehicle 10 is performed in a state in which transportation by the first conveyor 11A and traveling of the automatic guided vehicle 10 continue. However, since the movement is performed at a low speed, the case CS can be moved stably and reliably from the position on the first conveyor 11A to a place on the working section 23 of the automatic guided vehicle 10. Thereafter, the controller 74 controls driving of each claw drive motor 55 to cause each first claw 51 to retreat and be stored inside the arm 42.

In this manner, the case CS being transported by the first conveyor 11A is transferred from the first conveyor 11A to the automatic guided vehicle 10 while the automatic guided vehicle 10 is caused to travel along the first traveling line 15A in parallel with the first conveyor 11A.

Moreover, the controller 74 detects the position of the traveling line 15 on the basis of a detection output of the traveling line sensor 72 and controls driving of the traveling drive motor 33 of each driving wheel 32 in accordance with this detected position of the traveling line 15 to cause the automatic guided vehicle 10 to travel along a route of the first traveling line 15A → the second traveling line 15B → the third traveling line 15C (S111).

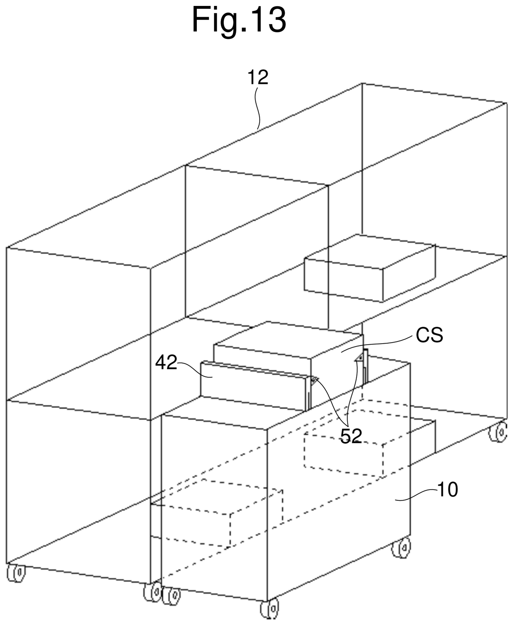

When the automatic guided vehicle 10 travels to the position of the storage shelf 12, the image capturing camera 71 captures an image of a 2D code Q2 attached to each of different positions in the traveling direction of the automatic guided vehicle 10 in the storage shelf 12. The controller 74 analyzes the captured image of the 2D code Q2 and detects location information of the storage shelf 12 included in the 2D code Q2. The controller 74 receives the location information of the storage shelf 12, which has been associated with the foregoing ID in advance, via the communication device 73. When an image of the 2D code Q2 including location information matching the location information of the storage shelf 12 associated with the foregoing ID is captured, the controller 74 stops the automatic guided vehicle 10 at a position at this point of time, as shown in the example in FIG. 13 (S112). At this time, the automatic guided vehicle 10 is in a posture in which the distal end of the arm 42 provided with each first claw 51 faces the storage shelf 12 side due to direction turning during each route change of the first traveling line 15A → the second traveling line 15B → the third traveling line 15C.

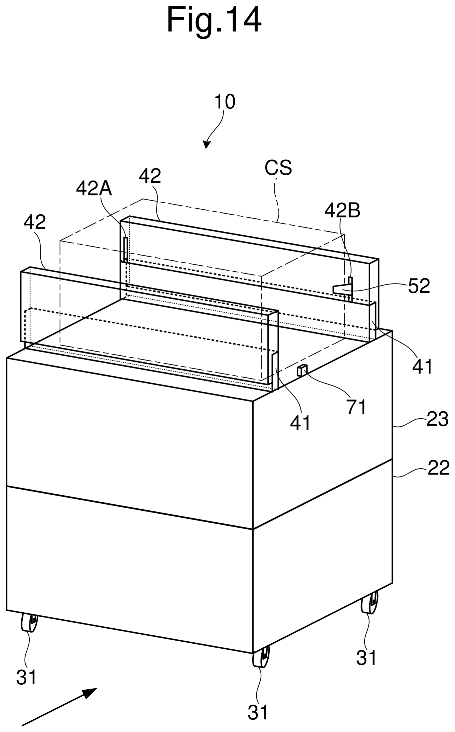

Here, the controller 74 controls driving of each claw drive motor 56 to cause the second claw 52 of each arm 42 on the rear end inward side to protrude, as shown in FIGS. 13 and 14 (S113). At this time, the second claw 52 of each arm 42 on the rear end inward side is positioned on the end side of the case CS which is a side opposite to the storage shelf 12.

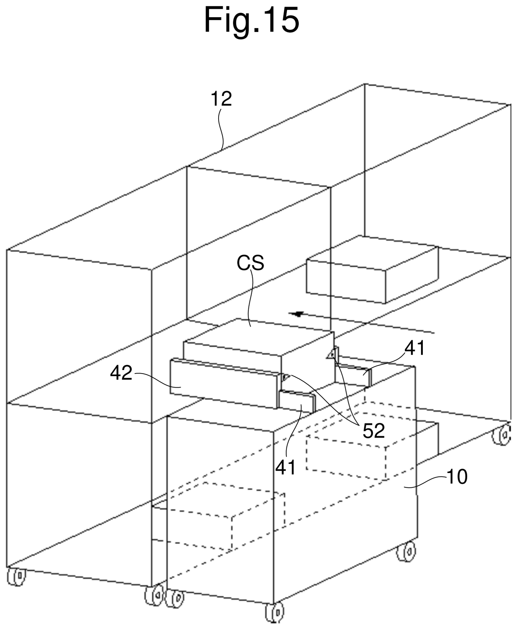

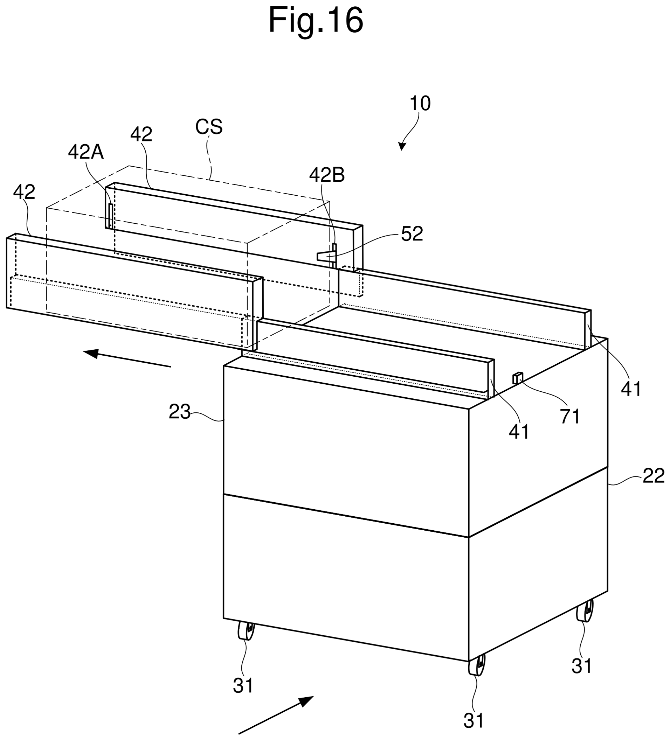

Subsequently, the controller 74 controls driving of each arm drive motor 45 to cause each arm 42 to protrude to the side of the storage shelf 12, as shown in FIGS. 15 and 16 (S114). The amount of protrusion at this time is set to an amount allowing the second claw 52 of each arm 42 on the rear end inward side to enter at least a position above the storage shelf 12. The slide rails 43 employs a constitution in which the second rail is interlocked and supported by the first rail and the movement direction thereof is guided by the first rail so that it also moves in the outward direction toward the storage shelf 12 side (direction opposite to the outside facing the first conveyor 11A side indicated using FIG. 3).

Due to the foregoing protrusion of each arm 42 to the side of the storage shelf 12, each second claw 52 is hooked onto the case CS, and each arm 42 and the second claw 52 described above push the case CS into the storage shelf 12 from above the working section 23 of the automatic guided vehicle to move the case CS to the storage shelf 12 from above the working section 23 of the automatic guided vehicle 10. Thereafter, the controller 74 controls driving of each claw drive motor 56 to cause each second claw 52 to retreat and be stored inside the arm 42.

The controller 74 detects the position of the traveling line 15 on the basis of a detection output of the traveling line sensor 72 and controls driving of the traveling drive motor 33 of each driving wheel 32 in accordance with this detected position of the traveling line 15 to cause the automatic guided vehicle 10 to travel along a route of the third traveling line 15C → the fourth traveling line 15D → the first traveling line 15A. After a certain time from when the proceeding direction is turned by 90 degrees between the fourth traveling line 15D and the first traveling line 15A, the traveling drive motor 33 of each driving wheel 32 is stopped, and the automatic guided vehicle 10 is stopped at the standby position HP (S115).

In this manner, in the present embodiment, if the first conveyor 11A starts transporting the case CS, the automatic guided vehicle 10 travels along the first traveling line 15A in parallel with the first conveyor 11A, the one arm 42 on the upstream side in the foregoing transportation direction protrudes. At this time, the traveling speed V of the automatic guided vehicle 10 is set to the traveling speed VA higher than a transportation speed VS of the case CS, and if the one arm 42 moves to the position of the case CS, the other arm 42 on the downstream side in the transportation direction protrudes. Further, the case CS is sandwiched between the arms 42. In this state, the first claw 51 of each arm 42 on the distal end inward side protrudes and each arm 42 is withdrawn into the automatic guided vehicle 10. At this time, each first claw 51 is hooked onto the case CS, and the case CS is pushed to the working section 23 of the automatic guided vehicle 10 from the first conveyor 11A by the arm 42 and the first claw 51 and moved to a place on the working section 23 of the automatic guided vehicle 10. Accordingly, according to the present embodiment, it is possible to transfer the case CS being transported by the first conveyor 11A to the automatic guided vehicle 10 while causing the automatic guided vehicle 10 to travel, and to efficiently move the case CS.

### <Modification Example 1>

In Modification Example 1, the working section 23 of the automatic guided vehicle 10 is raised and lowered in a vertical direction. For example, a plurality of struts are installed in a projecting manner in the traveling section 22 of the automatic guided vehicle 10, and the working section 23 is supported by each strut in a manner of being movable in the vertical direction so that the working section 23 is raised and lowered using a plurality of ball screws (known mechanism). The ball screws each include a screw shaft installed in a projecting manner in the traveling section 22 and rotatably supported, and a nut fixed to the working section 23 and screwed into the screw shaft. The traveling section 22 is provided with a corresponding raising/lowering motor for rotating each screw shaft. In response to control of the controller 74, each nut and the working section 23 are raised by rotating each screw shaft in one direction using each raising/lowering motor and each nut and the working section 23 are lowered by rotating each screw shaft in the opposite direction using each raising/lowering motor. Accordingly, even if the heights of the conveyor device 11 and the storage shelf 12 change, the working section 23 can be raised and lowered in accordance with the heights, and the case CS can be transferred between the working section 23 and the conveyor device 11 or the storage shelf 12.

### <Modification Example 2>

In Modification Example 2, the separation distance between the arms 42 is changed. For example, a rack gear supporting the one support wall 41 of the working section 23 in a manner of being slidable in a direction orthogonal to the longitudinal direction of each arm 42 and extending in a direction orthogonal thereto is provided at the lower end of the one support wall 41, a pinion gear meshing with this rack gear is provided, and a motor for reciprocally rotating the pinion gear is provided in the working section 23. Under the control of the controller 74, the motor causes the rack gear to reciprocate by reciprocally rotating the pinion gear, and the separation distance between the arms 42 is changed by moving the one support wall 41 and the one arm 42 toward or away from the other support wall 41 and the other arm 42. Accordingly, even if the width of the case CS changes, the case CS can be sandwiched between the arms 42, and the case CS can be transferred between the working section 23 and the conveyor device 11 or the storage shelf 12.

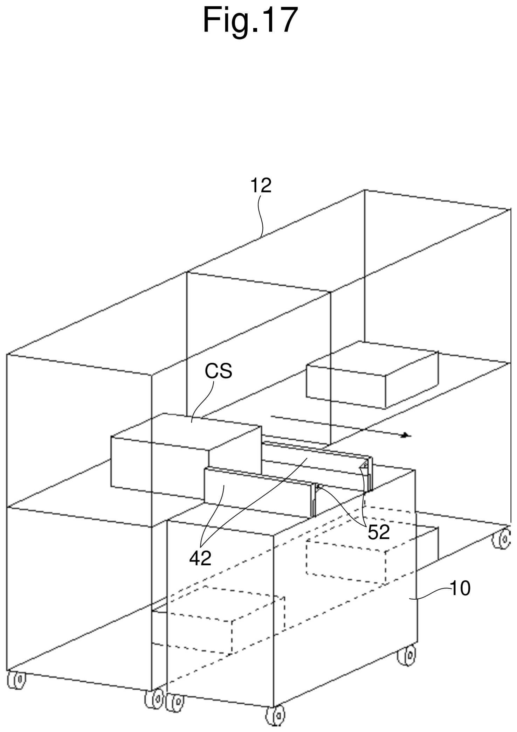

The constitution and the processing of the foregoing embodiment which have been described using FIGS. 1 to 17 are merely an embodiment of the present invention, and it is not intended that the present invention is not limited to the constitution and the processing. For example, in the foregoing embodiment, the embodiment has been described such that the case CS transported by the conveyor device 11 is taken into the automatic guided vehicle 10 and stored in the storage shelf 12. However, the controller 74 may control driving of the traveling drive motors 33, the arm drive motors 45, the claw drive motors 55, and the claw drive motors 56 to operate the arms 42, the first claws 51, the second claws 52, and the image capturing camera 71 described above performing an operation in which the automatic guided vehicle 10 takes in the case CS stored in the storage shelf 12 onto the automatic guided vehicle 10, the case CS is transported to the position of the conveyor device 11, and the case CS is transferred from a place on the automatic guided vehicle 10 to a place on the conveyor device 11.

## Claims

1. An automatic guided vehicle system comprising:
a conveyor for transporting an article loaded thereon; and
an automatic guided vehicle traveling along the conveyor,
wherein the automatic guided vehicle includes
a traveling drive device causing the automatic guided vehicle to travel by rotating driving wheels of the automatic guided vehicle,
a pair of arms provided at corresponding positions on the automatic guided vehicle on a downstream side and an upstream side in a transportation direction of the article in the conveyor when the automatic guided vehicle travels along the conveyor, extending in a direction orthogonal to the transportation direction of the article, facing each other at positions at a distance corresponding to a width of the article in the transportation direction of the article in the conveyor, protruding outward from the automatic guided vehicle by reciprocating in the orthogonal direction, and retracting into the automatic guided vehicle from the protruding positions,
arm drive devices for causing the corresponding arms to reciprocate in the orthogonal direction,
first claws correspondingly provided on distal end sides of the pair of arms, protruding to a space between the arms from arm parts on the distal end sides, and retreating into the arm parts,
first claw drive devices causing the corresponding first claws to perform the protrusive operation and the retreat operation, and
a controller controlling the traveling drive device, the arm drive devices, and the first claw drive devices to cause the automatic guided vehicle to travel along the conveyor at a traveling speed higher than a transportation speed of the article, cause the arm provided on the upstream side to protrude above the conveyor from the automatic guided vehicle, cause the arm provided on the downstream side to protrude above the conveyor from the automatic guided vehicle when the arm provided on the upstream side has moved to a position of the article being transported by the conveyor in the transportation direction, and cause each of the arms to retract into the automatic guided vehicle from above the conveyor after each of the first claws has protruded to the space between the arms from the distal end side of each of the arms in a state in which the article is present between the arms.

2. The automatic guided vehicle system according to claim 1,
wherein a predetermined mark is applied at a preset position in the article,
the automatic guided vehicle further includes an image capturing device capturing an image of a space above the conveyor, and
the controller judges that the arm provided on the upstream side has moved to the position of the article being transported by the conveyor when it is judged, based on analysis of an image captured by the image capturing device, that the image includes an image showing the mark.

3. The automatic guided vehicle system according to claim 2,
wherein the mark is a 2D code including information indicating a weight of the article, and
the controller controls the traveling drive device, when the weight of the article indicated by the information included in the 2D code is equal to or greater than a threshold, to reduce the traveling speed of the automatic guided vehicle to a predetermined traveling speed equal to or higher than the transportation speed of the article and lower than the previous traveling speed.

4. The automatic guided vehicle system according to claim 2,
wherein the mark is a 2D code including information indicating a weight of the article, and
the controller controls the traveling drive device, as the weight of the article indicated by the information included in the 2D code increases, to reduce a movement speed of each of the arms at which each of the arms is caused to retract the automatic guided vehicle from the space above the conveyor.

5. The automatic guided vehicle system according to claim 1 further comprising:
second claws correspondingly provided on rear end sides of the pair of arms, protruding to a space between the arms from arm parts on the rear end sides, and retreating into the arm parts; and
second claw drive devices causing the corresponding second claws to perform the protrusive operation and the retreat operation,
wherein the controller controls the arm drive devices and the second claw drive devices to cause the corresponding second claws to protrude to a space between the arms from arm parts on the rear end sides of the corresponding arms and cause the corresponding arms to protrude outward from the inside of the automatic guided vehicle.

6. An automatic guided vehicle traveling along a conveyor for transporting an article loaded thereon, the automatic guided vehicle comprising:
a traveling drive device causing the automatic guided vehicle to travel by rotating driving wheels of the automatic guided vehicle;
a pair of arms provided at corresponding positions on the automatic guided vehicle on a downstream side and an upstream side in a transportation direction of the article in the conveyor when the automatic guided vehicle travels along the conveyor, extending in a direction orthogonal to the transportation direction of the article, facing each other at positions at a distance corresponding to a width of the article in the transportation direction of the article in the conveyor, protruding outward from the automatic guided vehicle by reciprocating in the orthogonal direction, and retracting into the automatic guided vehicle from the protruding positions;
arm drive devices for causing the corresponding arms to reciprocate in the orthogonal direction;
first claws correspondingly provided on distal end sides of the pair of arms, protruding to a space between the arms from arm parts on the distal end sides, and retreating into the arm parts;
first claw drive devices causing the corresponding first claws to perform the protrusive operation and the retreat operation; and
a controller controlling the traveling drive device, the arm drive devices, and the first claw drive devices to cause the automatic guided vehicle to travel along the conveyor at a traveling speed higher than a transportation speed of the article, cause the arm provided on the upstream side to protrude above the conveyor from the automatic guided vehicle, cause the arm provided on the downstream side to protrude above the conveyor from the automatic guided vehicle when the arm provided on the upstream side has moved to a position of the article being transported by the conveyor in the transportation direction, and cause each of the arms to retract into the automatic guided vehicle from above the conveyor after each of the first claws has protruded to the space between the arms from the distal end side of each of the arms in a state in which the article is present between the arms.

7. The automatic guided vehicle according to claim 6 further comprising:
second claws correspondingly provided on rear end sides of the pair of arms, protruding to a space between the arms from arm parts on the rear end sides, and retreating into the arm parts; and
second claw drive devices causing the corresponding second claws to perform the protrusive operation and the retreat operation,
wherein the controller controls the arm drive devices and the second claw drive devices to cause the corresponding second claws to protrude to a space between the arms from the arm parts on the rear end sides of the corresponding arms and cause the corresponding arms to protrude outward from the inside of the automatic guided vehicle.
